# EUROPEAN PATENT SPECIFICATION

(11) **EP 1 455 169 B1**
(45) Date of publication and mention of the grant of the patent: **30.11.2011**
(21) Application number: 04396014.5
(22) Date of filing: 02.03.2004
(51) Int. Cl.: G01G 23/00

(54) **Method and arrangement for protecting a measuring transducer**
Verfahren und Anordnung zum Schutz eines Messumformers
Procédé et système pour protéger un capteur de mesure

(30) Priority: 03.03.2003 FI 20030328
(43) Date of publication of application: 08.09.2004
(73) Proprietor: TAMTRON OY, 33561 Tampere (FI)
(72) Inventor: Asikainen, Pentti, 35800 Mänttä (FI)
(74) Representative: Kupiainen, Juhani Kalervo

(56) References cited:
- CH-A5- 689 068
- DE-A1- 19 828 515
- DE-U1- 9 104 630
- US-A- 3 541 849
- US-A1- 2002 117 560
- US-B1- 6 246 132
- HUBER, FLECK,ASHBY: "The selection of mechanical actuators based on performance indices", PROC.R.SOC.LOND, vol. 453, 1997, pages 2185-2205,

## Description

The invention relates to a method and an arrangement for protecting a measuring transducer. The invention relates specifically to limiting the access of the effect of a measured quantity occurring outside a predetermined measuring range to the measuring transducer performing measurement of the quantity.

In the measurement of physical variables, dimensioning of the measuring transducer to match the measuring range as well as possible is important in order to optimise measuring accuracy and any other factors acting on the measurement process. However, at the same time, it will be necessary to take account of ranges outside the measuring range and to pay special attention to the capacity of the measuring transducer to remain undamaged under the effect of measured quantities which are exerted on the measuring transducer and whose magnitude and/or direction either exceeds or goes below the measuring range.

Conventional measuring transducers are over-dimensioned in order to withstand variations of a measured quantity exceeding or going below the measuring range, or optionally mechanical protection has been provided in the measuring transducer for quantities exceeding the range. Both methods have been conventionally used especially in weighing sensors. Weighing sensors have been over-dimensioned to withstand over-sized masses to be weighed and/or mechanical protection has been provided to prevent excessive loads on the sensor. In addition, in order to protect weighing sensors, among other things, mechanical chokes, piping solutions or other mechanical solutions have been used in front of the sensor to eliminate pressure shocks.

Patent document US3541849 discloses a prior art force transducer system. It is based on oscillating crystal, wherein a solenoid or a magnetostrictive element is used for providing a low frequency oscillation into the measurement structure. The system has an overload protection based on a spring, which supports the crystal and gives a counterforce for the crystal in normal operation. In an overload situation; however, the spring lets the crystal move in the direction of the force to be measured, and the excessive force becomes directed to other structure.

Patent DE 198285515 discloses a prior art force tranducer system. An electromagnetic compensation weighing device uses a piezoelectric overload/underload protection to avoid too high load on the mechanical structure and coil currents outside a predetermined range.

However, the prior art solutions mentioned above involves a number of problems. Thus, for instance, over-dimensioning impairs the accuracy of the actual measuring range, because the accuracy of the measuring transducers typically depends on the extension of the measuring range. Also, a high-precision measuring transducer operating over a large range incurs high production costs. On the other hand, dimensioning, manufacture, control and maintenance of mechanical protection are difficult. What is more, in electric weighing sensors, the sensor has very small physical deformation, and hence it is extremely difficult to accomplish mechanical overload protection that prevents overloads on the measuring transducer without

interfering with the measurement proper. Finally, it is also difficult to maintain an overload protective function.

Also, prior art electromechanical solutions are too slow for protecting e.g. a pressure sensor against rapid pressure peaks. Prior art protective means of pressure sensors have the drawback of a retarding effect on the measurement and of slow reactions when protection is required. Similar problems occur in the measurement of temperature, light intensity, force, torque and other similar physical quantities. In addition, electromechanical protective arrangements for different types of sensors are costly, slow, complicated and unreliable, especially when a measured quantity is rapidly varying from a value within the measuring range to a value beyond the measuring range.

The objective of the invention is to provide a solution for protecting measuring transducers that allows reduction of the prior art drawbacks mentioned above. The invention endeavours to resolve the issue how to limit the access of the effect of a measured quantity, which has a predetermined magnitude (and/or direction) and occurs outside the measuring range, to a measuring transducer measuring a quantity, by means of a simple, rapid, reliably operating and accurate solution that is also universal and inexpensive. A further objective of the invention is to provide a solution for protecting a measuring transducer that does not interfere with the measurement of the quantity at least in the measuring range.

The objectives of the invention are achieved by limiting at least partly the access of the effect of a measured quantity, which has a predetermined magnitude (and/or direction) and occurs beyond the measuring range, to the measuring transducer measuring a quantity. In accordance with the invention, such limitation is achieved by using a means made at least partly of functional metal, whose shape can be varied by means of a magnetic field provided in connection with the means containing functional metal. The objectives of the invention are particularly achieved with an arrangement in which, as a measurement signal proportional to the measured quantity is beyond the predetermined measuring range, or is passing from the predetermined measuring range beyond the measuring range, the magnetic field provided in connection with the functional metal is changed so that deformation of the functional metal limits at least partly, either indirectly or directly, the access of the effect of the measured quantity to the measuring transducer.

The arrangement of the invention for protecting a measuring transducer from the effect of a measured quantity, whose magnitude and/or direction exceeds/goes below a predetermined measuring range is characterised by claim 1.

The method of the invention for protecting a measuring transducer from the effect of a measured quantity, whose magnitude and/or direction exceeds/goes below a predetermined measuring range, is characterised by claim 15.

A number of preferred embodiments of the invention are disclosed in the dependent claims.

This patent application uses i.a. the following concepts:
- "functional metal" is the material used in the arrangement of the invention, preferably a ferromagnetic material or a magnetostrictive material, whose shape can be deformed by means of a magnetic field. Thus, for instance, functional metal can be surrounded with an electromagnetic coil generating a magnetic field that can be controlled by the electricity supplied to the coil. At the moment of writing this, functional metals are capable of changing their physical dimensions up to 10%. A functional metal can consist at least partly of e.g. nickel, cobalt, iron, terbium, dysprosium or a mixture of these.
- "magnetic field" in this context is a variable magnetic field generated most typically with one or more electromagnets, the magnetic field allowing deformation of functional metal by magnetostriction. Most preferably the magnetic field is generated by means of a coil arranged around the functional metal and electric current supplied to the coil.
- "measuring range" is the range for which the measuring transducer is devised or in which the measuring transducer has optimal susceptibility and/or reliability. The measuring range may also be included in the range for which the measuring transducer is intended. Most preferably, the measuring range is a measuring range comprised in the range between the maximum and minimum measurement value that the measuring transducer withstands. The measuring range can be predetermined, and it can be either permanent or variable. The measuring range may also be formed by determining one single limit value (e.g. a maximum or minimum value) compared to which the value of the measurement signal must not be higher/lower.
- "measuring transducer" in this context implies the part of a measuring device that is subject to the effect of the measured quantity and converts the measured quantity to a measurement signal proportional to this. The measuring transducer may be e.g. a weighing, force, torque, pressure, temperature and/or light intensity sensor.
- "measurement signal" is a signal provided by the measuring transducer, which most typically is electric and proportional to the quantity to be measured, its magnitude and/or direction. In this context, the measurement signal is particularly such that allows conclusion of the moment when the magnitude and/or direction of the measured quantity is within the measuring range or beyond the measuring range.
- "measured quantity" is either a scalar quantity, having merely a magnitude, or a vector quantity, which has a direction in addition to the magnitude. A measured quantity in this application implies a physical quantity or the effect it produces, which can be measured by a measuring transducer. The measured quantity may be e.g. a force (mass, weight, pressure), a torque, speed, temperature and/or light intensity. This measured quantity especially involves at least magnitude.

The invention achieves appreciable benefits over prior art solutions. The arrangement of the invention has rapid and reliable operation and is accomplished at low cost. The arrangement of the invention especially allows for protection of a measuring transducer against great and rapid changes of the effect of the measured quantity. The arrangement is also easily set. In addition, the inventive idea is highly universal and allows protection of measuring transducer solutions of most varying kinds, such as for instance weighing, force, torque, pressure, temperature and/or light intensity sensors. The arrangement of the invention also allows the accomplishment of measuring systems, in which the actual measuring transducer can be optimally dimensioned for a specific, e.g. narrow measuring range, in order to achieve measurement accuracy and other objectives set for the measurement. What is more, the invention allows the measuring transducer to be provided with smaller tolerances, achieving economic savings in combination with more accurate sensors for the measuring range in question. Also, the present invention allows for cost savings, because it effectively avoids any damage to the measuring transducers caused by high overloading/underloading.

The arrangement of the present invention is usable especially in the protection of measuring transducers emitting an electric output signal proportional to the effect (magnitude and/or direction) of the measured quantity. The output signal is subsequently used for controlling the protective system, which includes a means made at least partly of functional metal, which serves to affect directly or indirectly the access of the effect of the measured quantity to the measuring transducer. A magnetic field has also been generated in connection with the means e.g. with the aid of a coil for deforming the means. The output signal obtained from the measuring transducer can be used especially for controlling the current supplied to the coil, this current acting in turn on the magnetic field generated by the coil and consequently on the deformation of the means containing functional metal, so that the controllable magnetic field can produce a deformation of desired magnitude. A magnetic field of desired magnitude is achieved e.g. by means of electric current supplied to the coil by a control unit. In one embodiment, it is also possible to act on the direction of the magnetic field.

In one embodiment of the invention, the measuring transducer system can be constructed such that, with the measured quantity beyond the predetermined measuring range, the magnetic field surrounding the means containing functional metal is changed so as to deform the means containing functional metal, thus limiting the access of the effect of the measured quantity to the measuring transducer at least partly. The means containing functional metal may affect the access of the effect of the measured quantity to the measuring transducer either directly (direct effect) or optionally, by its deformation, the means may affect some other protective means limiting the access of the effect of the measured quantity to the measuring transducer (indirect effect).

In one embodiment, the inventive idea is applicable e.g. by conducting a measurement signal obtained from the measuring transducer to the control unit of the protective system, which controls the means containing functional metal in real time with the aid of a magnetic field generated in connection with the means, as the value of the measurement signal changes, or optionally only when the measurement signal is above/under a predetermined limit value determining the measuring range. The measurement signal can be conducted to the protective system in parallel with the unit for processing the actual measurement signal, or optionally the measurement signal can be conducted to the protective system from the unit for processing the measurement signal.

An output can preferably be provided in the control unit for indicating e.g. to the user or the measurement signal processing unit that the protective function is in use, and then there will be no errors in the measurement processing that would risk using the measurement signal as the proper measurement result when protection is applied. This enables storage for further processing of data relating also to protective functions, such as data relating to activated protection and period of protection, and also wireless or wired transfer of data related to the protective functions to other data systems by means of appropriate accessories.

The invention also allows variation of a predetermined measuring range. The measuring range can be e.g. narrowed, enlarged or the operation of the protective system can be shifted by changing its minimum or maximum value while considering the measuring range and the tolerances. The accessories also allow the change of the measuring range to be performed as wireless or wired remote control.

The invention is applicable e.g. to the protection of weighing sensors, so that deformation of the means containing functional metal prevents access of the force effect of an overload/underload to the measuring transducer. In an overload/underload situation, the means containing functional metal can be deformed so that the load on the balance bridge of the weighing system is at least partly supported by the means containing functional metal, and the force effect of the overload/underload does not reach the measuring transducer, at least not in its totality. Optionally, deformation of the means containing functional metal can act on the access of the effect of some other measured quantity to a limiting protective means of the measuring transducer, so that the force effect of the overload/underload does not reach the measuring transducer, at least not in its totality.

In one embodiment, the invention is also applicable e.g. in the protection of pressure, temperature and light intensity sensors. In these as well, the means containing functional metal can, in a situation where the measuring transducer is overloaded/underloaded, at least partly prevent the access of the effect of the measured quantity to the measuring transducer either directly (active choking) or indirectly. In front of the measuring transducer, on the side subject to the effect of the measured quantity, a protective means can be provided for controlling at least partly the access of the effect of the measured quantity to the measuring transducer, so that, in a situation where the measuring transducer is overloaded/underloaded, the means containing functional metal can bar the access of the effect of the measured quantity at least partly, or optionally completely, to the measuring transducer, by means of the protective means arranged in front of the measuring transducer.

The inventive idea further enables protection of the measuring transducer also when the measuring transducer is not even used and/or the measuring device is not switched on. Protection is useful also during transportation, for instance. The inventive idea is readily adapted to the transport situation compared to e.g. conventional transport platforms and similar prior art protective solutions, which always require a person for taking the protection into use and for removing it from use. Especially in high-precision measuring devices, such as scales, transportation involves a high risk for preserved accuracy of the measuring transducer. Also, "leaning" is generally damaging to measuring devices, such as sensitive scales, whether they are switched on or not.

The inventive idea can be utilised e.g. in vehicles for goods transportation, which comprise a measuring transducer for measuring the mass of the load, for instance.

With the inventive idea, the force effect of the load can be directed to the measuring transducer if desired, yet during load transportation, for instance, a construction such as a platform, container or the like can be supported by the frame constructions of the vehicle without exerting load on the measuring transducer. Thus the protective function can achieve higher reliability and longer service life of the weighing system, because the loading effect exerted on the measuring transducer by the platform construction on which the load is loaded can be prevented, unlike prior art solutions, in which the measuring transducer is typically solidly mounted between the vehicle frame and the platform constructions, so that measuring transducers tend to be exposed to damage as the vehicle is running or loaded, if a heavy object is dropped onto the platform construction, for instance.

In one embodiment of the invention, protection can be achieved so that, with the measuring device switched off, the means containing functional metal is in a form protecting the measuring transducer either directly or indirectly as described in the example above. When the measuring device is switched on, the means containing functional metal may be deformed (shortened, for instance) so that the access of the effect of the measured quantity to the measuring transducer, and thus also measurement, are allowed, yet so that in the event of overload/underload during measurement, the means containing functional metal can be deformed again, thus protecting the measuring transducer either directly or indirectly against overload/underload. The protective action can be achieved manually, for instance, using a switch, or optionally automatically.

A number of embodiments of the invention are explained in greater detail in the following section with reference to the accompanying drawings, in which
- Figure 1: shows an exemplifying arrangement for deforming a means containing functional metal by means of a magnetic field,
- Figure 2a: is a block diagram of an exemplifying arrangement for protecting a weighing sensor against overloading/underloading in an exemplifying embodiment of the present invention,
- Figure 2b: is a block diagram of the exemplifying arrangement of figure 2a with the arrangement in measuring state,
- Figure 3a: is a block diagram of a second exemplifying arrangement for protecting a weighing sensor against overloading/underloading in an exemplifying embodiment of the present invention,
- Figure 3b: is a block diagram of the exemplifying arrangement of figure 3a with the arrangement in measuring state,
- Figure 4a: is a block diagram of an exemplifying arrangement for protecting a weighing sensor against overloading/underloading in an example,
- Figure 4b: is a block diagram of the exemplifying arrangement of figure 4a with the arrangement in protective state,
- Figure 5: is a block diagram of a method for protecting a weighing sensor against overloading/underloading in an exemplifying embodiment of the present invention, and
- Figure 6: is a block diagram of a method for protecting a weighing sensor against overloading/underloading in a second exemplifying embodiment of the present invention.

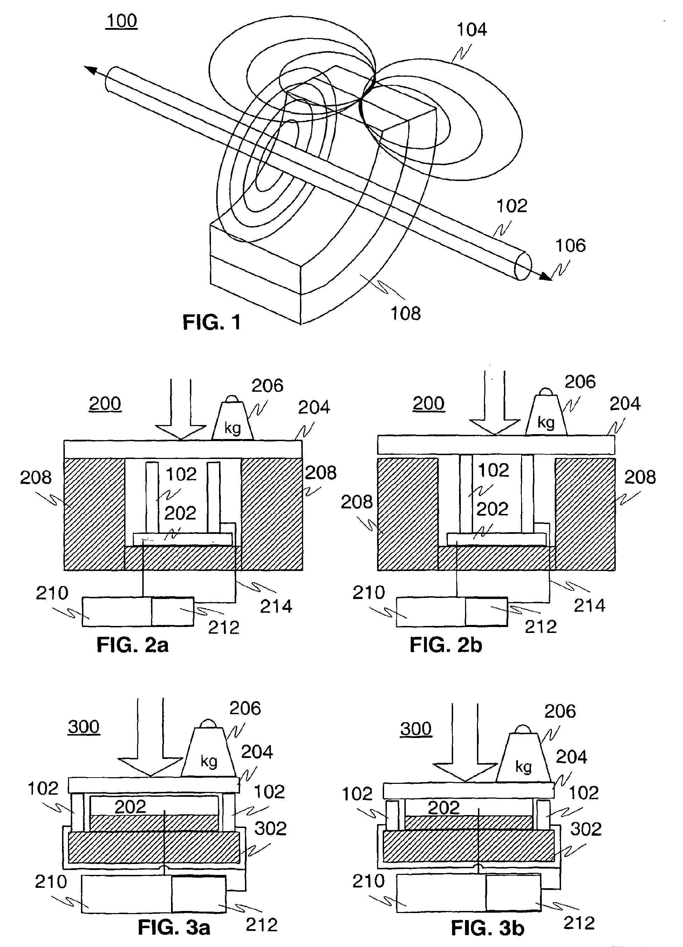

Figure 1 shows an exemplifying arrangement 100 for deforming a means 102 containing magnetostrictive functional metal by means of a magnetic field 104. Current magnetostrictive functional metals are up to 10% deformable, in length 106, for instance. In addition, the use of magnetostrictive materials allows very rapid achievement of strong force and large movement if desired, at frequencies up to tens of kHz, using magnetic field 104. Magnetic field 104 can be generated e.g. by means of a coil 108 arranged around the means 102 containing functional metal and electric current supplied to this.

Figure 2a is a block diagram of an exemplifying arrangement 200 for protecting the weighing sensor 202 of a weighing system against overloading/underloading in an exemplifying embodiment of the present invention, in which, with the weighing system in OFF state, the balance bridge 204 of the weighing system, on which the load to be measured is arranged, is typically supported on support beams 208 without loading the measuring transducer 202.

With the weighing system in ON state (measuring state, figure 2b), the means 102 made of functional metal is deformed by means of a magnetic field so that the length of the means 102 increases and the load on the balance bridge 204 is transmitted to the measuring transducer 202. The means 202 containing functional metal can be arranged e.g. with its first end in contact with the measuring transducer 202, and in ON state, the means 102 containing functional metal increases in length as a result of the change of the magnetic field, so that its other end supports the balance bridge 204 above the support beams 208, thus transmitting the force effect generated by the load on the balance bridge 204 to the measuring transducer 202.

Unless the force effect generated by the load 206 and thus also the measurement signal are within the predetermined measuring range, the magnetic field deforming the means 102 containing functional metal is adjusted by shortening the length of the means 102 containing functional metal (figure 2a), the balance bridge being again supported by the support beams 208, without the balance bridge 204 loading the measuring transducer 202. It should be especially noted that the movement could be achieved very rapidly if necessary, even at a frequency of up to tens of kHz, thus preventing damage to the measuring transducer as effectively as possible. It should also be noted that these movements under consideration might be extremely small (of the order of one millimetre and even less, depending on the size of the transducer and the purpose of measurement).

In one embodiment, the measuring process may be e.g. the following. The weighing system is initially in OFF state, and then, as illustrated in figure 2a, the control unit 212 of the protective system 210 controls the magnetic field generated around the means 102 containing functional metal, so that the means 102 containing functional metal gets a minimum length (for instance, the control unit 212 does not supply the coil generating the magnetic field with current), and then the balance bridge 204 is supported by the support beams 208 and does not consequently generate a force effect on the measuring transducer 202. When the weighing system is switched in ON state (measuring state, figure 2b), the control unit 212 of the protective system 210 controls the magnetic field generated around the means 102 containing functional metal so that the means 102 containing functional metal gets a length such (increases) that the means 102 supports the balance bridge 204 at least partly (for instance, the control unit 212 supplies the coil generating the magnetic field with current), the balance bridge 204 being at least partly supported by the means 102 containing functional metal, at least part of the force effect generated by the load 206 reaching the measuring transducer 202.

In measuring state, the protective system 210 of the weighing system analyses a measurement signal which is proportional to the magnitude of the load 206 to be measured and which it has received either directly from the measuring transducer 202 or optionally from any other unit for processing the measurement signal (not illustrated in the figure). If the force effect generated by the load 206 and thus also the measurement signal are beyond the predetermined measuring range, or optionally, exceeds/goes below a predetermined limit value, the control unit 212 of the protective system 210, by supplying the coil with electric current, for instance, produces such a change in the magnetic field generated in connection with the means 102 containing functional metal that results in a rapid decrease of the length of the means 102 containing functional metal, so that the balance bridge 204 is again supported by the support beams 208 and does not load the measuring transducer 202.

In an overload/underload situation, or when the protective function is otherwise switched on (figure 2a), the protective unit 210 may e.g. inform the user that the load on the measuring transducer 202 is above/under a predetermined measuring range, and in that case the measurement will not be continued until the user has given an acknowledgement. Optionally, the control unit 212 may gradually change the magnetic field generated around the means 102 containing functional metal so that the length of the means 102 containing functional metal changes and that the force effect produced by the load 206 again reaches the measuring transducer 202 at least partly. If the force effect produced by the load and thus also the measurement signal are still beyond the measuring range, the control unit 212 controls the current supplied to the coil so that the length of the means 102 containing functional metal decreases and that the balance bridge 204 is again supported by the support beams 208.

Data transfer 214 between the measuring transducer 202 and the protective unit 210, and also between the control unit 212 and the arrangement for generating the magnetic field controlling the shape of the means 102 containing functional metal, can be performed by methods familiar to those skilled in the art, such as e.g. wireless and/or wired data transfer methods.

The inventive idea is advantageously applicable also in situations for transporting measuring systems, such as sensitive scales, allowing the measuring system to be switched in OFF state (figure 2a). The inventive idea is also applicable in situations where the weighing system has been installed in a vehicle, such as a car, a train or any other vehicle for goods transportation, a power tool, a crane, a material handling machine, for instance, allowing the system to be switched into measuring state in the weighing situation (figure 2b) and accordingly, into OFF state during transportation (figure 2a), in order to prevent a force effect from reaching the measuring transducer and thus to protect the measuring transducer from oscillation and vibration caused by transportation, for instance.

The use of the arrangement of the invention yields a particularly great benefit when utilised in trains, especially in weighing systems provided in railway wagons, allowing the measuring arrangement of an individual wagon or optionally of all the wagons to be readily brought into measuring state or OFF state at once in accordance with the invention. In measuring state, each individual arrangement integrated in the railway wagon may operate independently, so that, as the effect of the measured quantity is above/under a predetermined limit, the individual arrangement may pass into OFF state at least for a period of time, informing the user of this either by a wired or a wireless data transfer process, for instance.

Figure 3a is a block diagram of a second exemplifying arrangement 300 of the invention for protecting a weighing sensor 202 from overload/underload in an exemplifying embodiment of the present invention, in which, with the weighing system in OFF state, the balance bridge 204 of the weighing system, on which the load 206 to be measured is arranged, is supported by the means 102 containing functional metal, so that the measuring transducer 202 is not loaded. In this case, the first end of the means 102 containing functional metal is arranged in the support structure 302 and the other end on the balance bridge 204.

With the weighing system in ON state (measuring state, figure 3b), the means 102 containing functional metal is deformed by means of a magnetic field generated in connection with the means 102, so that the force effect produced by the load 206 on the balance bridge 204 is transmitted to the measuring transducer 202 at least partly. The means 102 containing functional metal can be arranged e.g. so as to shorten as a result of a change of the magnetic field, so that its one end does no longer support the balance bridge 204, but the balance bridge 204 starts bearing against the measuring transducer 202, or that the force effect produced by the load 206 on the balance bridge 204 is transmitted in some other manner to the measuring transducer 202.

Unless the force effect produced by the load 206 and thus also the measurement signal are within the preset measuring range, the shape of the means 102 containing functional metal is adjusted by means of the magnetic field generated in connection with the means 102 so that the length of the means 102 containing functional metal grows and the balance bridge 204 is again supported by the means 102 containing functional metal (figure 3a), the balance bridge 204 not loading the measuring transducer 202.

It should be noted that the exemplifying arrangement 300 shown in figures 3a and 3b may have quite similar functions as the arrangement 200 of figures 2a and 2b. The crucial difference between arrangements 200 and 300 is, that in arrangement 300 the balance bridge 204 is supported at least partly by the means 102 containing functional metal in OFF state or in underloading/overloading situation, whereas in arrangement 200, the balance bridge 204 is supported by support beams 208, and further in ON state, the balance bridge 204 is supported directly by the measuring transducer 202 in arrangement 300, whereas in arrangement 200, the force effect produced by the balance bridge 204 and the load 206 is transmitted to the measuring transducer 202 via the means 102 containing functional metal. It should also be noted that the measuring transducer 202 shown in figures 2a-3b is most preferably a force sensor, such as a weighing sensor or a pressure sensor.

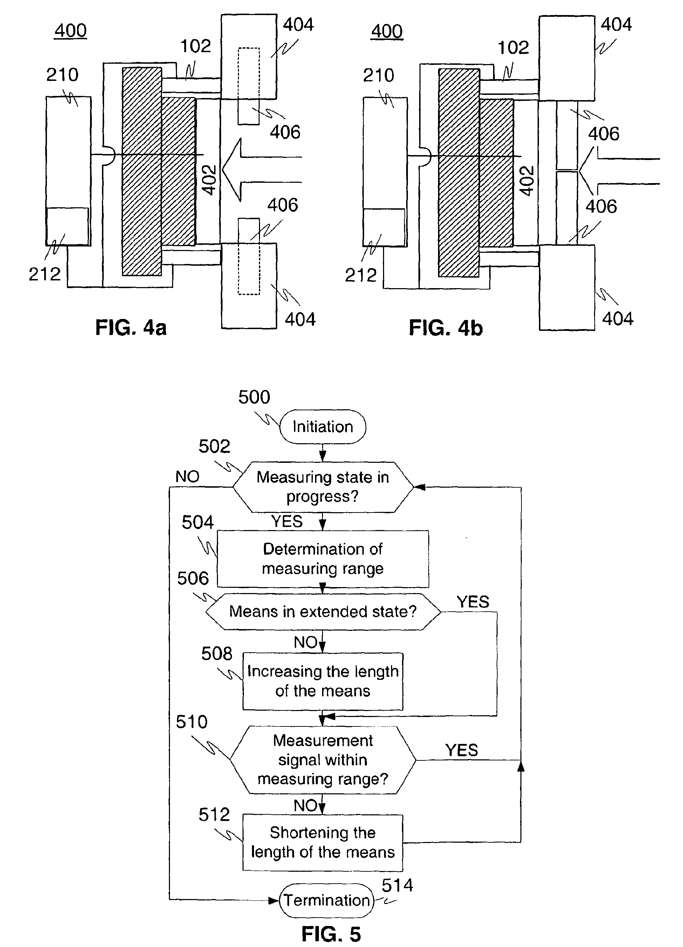

Figures 4a and 4b are block diagrams of an exemplifying arrangement 400 for protecting a measuring transducer 402 from overload/underload in an example. The measuring transducer 402 may be any measuring transducer, such a measuring transducer intended for measuring light intensity, temperature or pressure.

The arrangement 400 may have basic functions and properties similar to the arrangement shown in figures 2a-3b, comprising a means 102 containing functional metal, a protective unit 210, a control unit 212 and a measuring transducer 402. However, the arrangement 400 is characterised by an arrangement 404 used for producing a protective function, the arrangement comprising a protective means 406 for at least partly limiting access of the effect of the measured quality of the protective means 406 to the measuring transducer 402. In measuring state (ON state, figure 4a), the protective means 406 may be arranged so that the effect of the measured quantity at least partly reaches the measuring transducer 402. In an overloading/underloading situation and/or in OFF state (figure 4b), the protective means 406 is preferably arranged so as to at least partly prevent the effect of the measured quantity from reaching the measuring transducer 402.

The measured range, the measurement signal and the overload/underload can be monitored in arrangement 400 in a similar manner as in arrangements 200 and 300. In arrangement 400 the protective means 406 itself may constitute the means 102 containing functional metal (not shown), and in that case, a change of the length of the means would as such directly influence (direct effect) the access of the effect of the quantity to the measuring transducer 402. Optionally, the protective means 406 can be controlled so as to limit the access of the effect of the measured quantity to the measuring transducer 402 by means of deformation of the means 102 containing functional metal, and in this embodiment, the protective means 406 is functionally connected, e.g. via a lever arm, to the means 102 containing functional metal, so that a deformation of the means 102 makes the protective means 406 slide into and out of a position in front of the measuring transducer, so that the effect of the measured quantity on the measuring transducer 402 is either prevented or permitted.

Figures 2a-4b above do not show other means included in the measuring device, such as e.g. a unit for processing a measurement signal, a display or an interface. These members or their operation do not as such have any special impact in terms of the basic idea of the present invention. However, it should be noted that the measurement signal can be conducted from measuring transducer 202, 402 either directly to a protective system of the measuring transducer arranged in parallel with the unit for processing the measurement signal, and/or to a unit for controlling the magnetic field. Optionally, the measurement signal can be conducted first to the unit for processing the measurement signal and from there either as an unprocessed or processed signal to a system for protecting the measuring transducer arranged serially with the unit for processing the measurement signal and/or the unit for controlling the magnetic field. In addition, to maintain the clarity of the figures, figures 2a-4b illustrate the means 102 containing functional metal alone, yet it should be understood that there are also other practical means in connection with the means 102, for instance the means shown in figure 1, such as a coil 108 required for generating a magnetic field.

Figure 5 is a flow diagram of a method 500 for protecting a measuring transducer from overload/underload in an exemplifying embodiment of the present invention (corresponding at least partly to the arrangements and situations shown in figures 3 a and 3b). The process may start by checking whether the device is turned in measuring state (ON state) in step 502. If not, the performance can be terminated in step 512. Otherwise the measuring range can be determined in step 504, if necessary.

In step 506, the user may check whether the coil required for generating the magnetic field is supplied with current and whether the means 102 containing functional metal is in a state (extended), in which it produces a protective effect for the measuring transducer. If the means is extended, the following step will be the step 510 of checking the measurement signal. Unless the means is in the extended state, the length of the means is increased in step 508 e.g. by supplying current to the coil generating the magnetic field, so that the means is deformed, allowing the effect of the measured quantity to reach the measuring transducer.

In step 510, the magnitude of the measurement signal is checked and compared with the predetermined measuring range. If the measurement signal is within the measuring range, step 502 may be resumed, for instance. If, again, the measurement signal is beyond the measuring range, the length of the means can be immediately shortened e.g. by reducing the current supplied to the coil in step 512, and subsequently step 502 may be resumed. It should be noted here that the process does not necessarily proceed from step 502 before the user has acknowledged the situation. It should also be noted that in step 510, it is possible to optionally check (especially in an underloading situation) whether the means is fully extended, and if not, to further increase the length of the means in order to get the measurement signal within the measuring range (especially if the value of the measurement signal is under the lower limit of the measuring range).

The arrangement can be turned off from measuring state in any step, e.g. manually or automatically, so that, in step 512, as the measurement is ended, the arrangement can be turned in protected state, where it is possible to prevent altogether the effect of the measured quantity from reaching the measuring transducer by means of the means 102 containing functional metal in accordance with the invention. This is a great advantage during transportation, for instance, the measuring device being transported or optionally mounted in a vehicle, where it may be damaged under the effect of movement or loading, for instance.

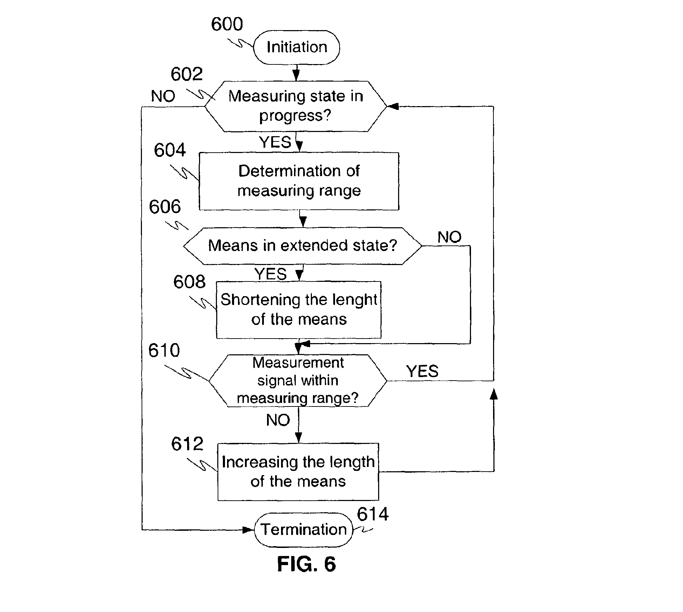

Figure 6 is a flow diagram of a method 600 for protecting a measuring transducer from overloading/underloading in a second example (corresponding at least partly to the arrangements and situations shown in figures 4a and 4b). The process may start by checking in step 602 whether the device is in measuring state (ON state). If not, the operation can be terminated in step 612. Otherwise, the user may determine the measuring range in step 604, if necessary.

In step 606, the user may check whether the coil required for generating the magnetic field is supplied with current and whether the means containing functional metal is in a state (has a length), in which it produces a protective effect for the measuring transducer. If the means is not in this state (extended), the process may go on to checking the measurement signal in step 510. If, again, the means is extended, the length of the means can be shortened in step 608, e.g. by reducing the power supply to the coil generating the magnetic field, so that the means is deformed, allowing the effect of the measured quantity to reach the measuring transducer.

In step 610, the magnitude of the measurement signal is checked and compared with the predetermined measuring range. If the measurement signal is within the measuring range, step 602, for instance, can be resumed. If, again, the measurement signal is not within the measuring range, the length of the means can be extended immediately, for instance by increasing the current supplied to the coil in step 612, and then step 602 can be resumed. In this conjunction, it should be noted that the process does not necessarily proceed from step 602 before the user has acknowledged the situation.

The arrangement can be turned off from measuring state in any step manually or automatically, for instance, and then, in step 612, when the measurement is completed, the arrangement can be turned into protected state, thus preventing totally the effect of the measured quantity from reaching the measuring transducer. This is a great advantage during transportation, for instance, the measuring device being transported or optionally mounted in a vehicle, where it is at risk of damage caused by a movement or loading, for instance.

Only a number of embodiments of the solution in accordance with the invention have been described above. The principle of the invention can naturally be varied within the scope of protection defined by the claims, regarding details of the embodiment and fields of application, for instance. The method is particularly applicable to weighing systems and scales, but also to radiation, light intensity, pressure and temperature sensors. It should also be especially noted that protection of a measuring transducer can be achieved by the means containing functional metal being either extended or shortened, depending on the disposition of the means and also on the fact whether the means containing functional metal controls another protective means, which, again, serves to limit the access of the effect of the measured quantity to the measuring transducer. In addition, it should be noted that the arrangement may be accomplished outside the transducer, or optionally, the assembly in its totality may be integrated in the transducer so as to form a unit within the scope of protection defined in the claims.

It should further be noted that the means containing functional metal may be exposed to the effect of the quantity to be measured during the measurement so that e.g. a mass to be measured loads not only the measuring transducer but also the means containing functional metal in an embodiment, where the balance bridge is hinged at one end and where the movement of the balance bridge is transmitted to the measuring transducer, so that also the means containing functional metal is transformed during the measurement. Protection is achieved when the measurement signal exceeds/goes below the measuring range by stopping the deformation of the means containing functional metal (e.g. collapsing under the load) by means of a magnetic field generated around the means.

## Claims

1. An arrangement (200, 300, 400) for protecting a weighing transducer (202, 402) of a weighing device from the effect of a measured quantity, whose magnitude and/or direction exceeds/goes below a predetermined measuring range, the weighing transducer providing a measurement signal which is proportional to the effect of the measured quantity on the weighing transducer (202, 402),
wherein the arrangement comprises
- means for limiting the access of the measured quantity to the weighing transducer when the measured quantity exceeds/goes below a predetermined measuring range, and
- means for analysing whether the measurement signal proportional to the effect of the measured quantity exceeds/ goes below a predetermined measuring range;
**characterised in that**:
- the means for limiting comprises a means (102) made of functional metal, the functional metal being ferromagnetic or magnetostrictive material, the shape of the means (102) made of functional metal being deformable with the aid of a magnetic field (104) generated in connection with the means (102) made of functional metal;
- the arrangement (200, 300, 400) comprises means (212) for controlling said magnetic field (104) and thus also the shape of said means (102) made of functional metal on the basis of whether the measurement signal proportional to the effect of the measured quantity exceeds/goes below a predetermined measuring range, in order to limit the access of the measured quantity to the weighing transducer when the measurement signal proportional to the effect of the measured quantity exceeds/goes below a predetermined measuring range;
and
the controlling means (212) are adapted to, in the event of overload/underload during measurement, gradually change the magnetic field generated around the means (102) containing functional metal so that the length of the means containing functional metal changes and that the force effect produced by the load again reaches the measuring transducer (202) at least partly.

2. An arrangement as defined in claim 1, **characterised in that** said means (102) made of functional metal is arranged such that, as a result of its deformation, the means (102) directly limits the access of the effect of the measured quantity to the weighing transducer (202, 402).

3. An arrangement as defined in claim 1, **characterised in that** the arrangement also comprises a protective means (406) and **in that** the access of the effect of the measured quantity to the weighing transducer (202, 402) is limited with the aid of said means (102) made of functional metal indirectly, so that, as a result of its deformation, the means (102) affects said protective means (406), the protective means (406) limiting the access of the effect of the measured quantity to the weighing transducer (202, 402).

4. An arrangement as defined in any of claims 1, 2 or 3, **characterised in that** said means (102) made of functional metal or said protective means (406) is arranged such that the access of the effect of the measured quantity to the weighing
transducer (202, 402) is limited by controlling said means/protective means (102/406) at least partly into a position in front of the weighing transducer (202, 402) on the side subject to the effect of the measured quantity.

5. An arrangement as defined in claim 1, **characterised in that** said functional metal is magnetostrictive metal.

6. An arrangement as defined in claim 1, **characterised in that** said weighing transducer is a force or pressure
sensor.

7. An arrangement as defined in claim 1, **characterised in that** said measurement signal proportional to the effect of the measured quantity is an electric measurement signal obtained from the weighing transducer (202, 402).

8. An arrangement as defined in claim 1, **characterised in that** the arrangement comprises at least one coil (108) for generating a magnetic field (104) in connection with said means (102) made of functional metal, the magnetic field (104) of the coil (108) being changed by means of electric current supplied to the coil (108).

9. An arrangement as defined in claim 1, **characterised in that** the arrangement comprises additionally a protective unit (210) for analysing a measurement signal proportional to the effect of the measured quantity on the weighing
transducer (202, 402) and a control unit (212) in data transfer communication with said protective unit (210) for deforming said means (102) made of functional metal, with a view to controlling the generated magnetic field (104).

10. An arrangement as defined in claim 1, **characterised in that** said predetermined measuring range is a variable measuring range comprised between the maximum and minimum measurement values that the weighing transducer (202, 402) withstands.

11. An arrangement as defined in claim 1, **characterised in that** the arrangement is arranged to be manually or automatically controlled, so that the arrangement can be turned into protected state if desired, in which the access of the effect of the measured quantity to the weighing transducer (202, 402) is limited at
least partly with the aid of deformation of said means (102) made of functional metal.

12. An arrangement as defined in claim 1 or 11, **characterised in that** the arrangement is arrangeable to be turned into protected state during transportation, the access of the effect of the measured quantity to the weighing
transducer (202, 402) being at least partly limited as a result of deformation of said means (102) made of functional metal.

13. An arrangement as defined in any of claims 1, 11 or 12, **characterised in that** the arrangement is arranged to inform the user of the arrangement being in protected state, during which the access of the effect of the measured quantity to the weighing transducer (202, 402) is limited at least partly as a result of deformation of said means (102) made of functional metal.

14. An arrangement as defined in any of the preceding claims, **characterised in** being arranged to perform data transfer between different parts (202, 210, 212) of the arrangement and the user under wired or wireless data transfer specifications.

15. A method (500, 600) for protecting a weighing transducer (202, 402) from the effect of a measured quantity, whose magnitude and/or direction exceeds/goes below a predetermined measuring range, in a weighing device wherein the weighing transducer provides a measurement signal which is proportional to the effect of the measured quantity on the weighing transducer (202, 402),
wherein in the method the access of the measured quantity to the weighing transducer is limited when the measured quantity exceeds/goes below a predetermined measuring range,
and it is analysed (510, 610) whether a measurement signal proportional to the effect of the measured quantity exceeds/ goes below a predetermined measuring range;
**characterised in that**:
- as the measurement signal proportional to the effect of the measured quantity on the weighing transducer (202, 402) exceeds/goes below a predetermined measuring range, a variable magnetic field is applied to a means made of functional metal, the functional metal being ferromagnetic or magnetostrictive material, the shape of the means (102) made of functional metal being deformable with the aid of a magnetic field (104); and
- the access of the measured quantity to the weighing transducer is limited with the aid of deformation of the means made of functional metal when said variable magnetic field is applied to the means made of functional metal when the measurement signal proportional to the effect of the measured quantity exceeds/goes below a predetermined measuring range;
and
- controlling means (212), in the event of overload/underload during measurement, gradually change the magnetic field generated around the means (102) containing functional metal so that the length of the means containing functional metal changes and that the force effect produced by the load again reaches the measuring transducer (202) at least partly.

16. A method as defined in claim 15, **characterised in that** the access of the effect of the measured quantity to the weighing transducer (202, 402) is limited
directly with the aid of said means (102) made of functional metal.

17. A method as defined in claim 15, **characterised in that** the access of the effect of the measured quantity to the weighing transducer (202, 402) is limited
indirectly with the aid of said means (102) made of functional metal, such that, as a result of its deformation, the means (102) affects at least one other protective means (406), said protective means (406) limiting the access of the effect of the measured quantity to the weighing transducer (202, 402).

18. A method as defined in claim 15, **characterised in that** a magnetic field (104) is generated in connection with said means (102) made of functional metal with the aid of at least one coil (108), and **in that** said magnetic field (104) is varied by means of electric current supplied to the coil (108).

19. A method as defined in claim 15, **characterised in that** the method comprises analysis (510, 610) of a measurement signal proportional to the effect of the measured quantity on the weighing transducer (202, 402) with the aid of
a protective unit (210) and **in that** the magnetic field (104) generated for deforming said means (102) made of functional metal is controlled with a control unit (212) in data transfer communication with the protective unit (210).

20. A method as defined in claim 15, **characterised in that** the arrangement is controlled manually or automatically to turn the arrangement into protected state if desired, in which the access of the effect of the measured quantity to the weighing transducer (204, 402) is limited at least partly by means of deformation of said means (102) made of functional metal.

21. A method as defined in claim 15 or 20, **characterised in that** the arrangement is arranged in protected state during transportation, so that the access of the effect of the measured quantity to the weighing transducer (202, 402) is limited at least partly with the aid of deformation of said means (102) made of functional metal.

22. A method as defined in any of claims 15, 20 or 21, **characterised in that** the user is informed of the arrangement being in protected state, in which the access of the effect of the measured quantity to the weighing transducer (202, 402) is limited at least partly as a result of deformation of said means (102) made of functional metal.

23. A method as defined in any of the preceding claims, **characterised in that** data transfer between different parts (202, 210, 212) of the arrangement and the user is performed under wired or wireless data transfer specifications.

## Patentansprüche

1. Anordnung (200, 300, 400) zum Schutz eines Wiegeumformers (202, 402) einer Wiegevorrichtung vor der Einwirkung einer Messgröße, deren Betrag und/oder Richtung einen vorab festgelegten Messbereich überschreitet oder unterschreitet, wobei der Wiegeumformer ein Messsignal bereitstellt, das proportional zur Einwirkung der Messgröße auf den Wiegeumformer (202, 402) ist,
wobei die Anordnung umfasst
- ein Mittel zur Begrenzung des Zugangs der Messgröße zum Wiegeumformer, wenn die Messgröße einen vorab festgelegten Messbereich überschreitet/unterschreitet, und
- ein Mittel zum Analysieren, ob das zur Einwirkung der Messgröße proportionale Messsignal einen vorab festgelegten Messbereich überschreitet/unterschreitet;
**dadurch gekennzeichnet, dass**:
- das Mittel zum Begrenzen ein aus funktionellem Metall hergestelltes Mittel (102) umfasst, wobei das funktionelle Metall ferromagnetisches oder magnetostriktives Material ist und die Gestalt des aus funktionellem Metall hergestellten Mittels (102), mit Hilfe eines Magnetfeldes (104), das in Verbindung mit dem aus funktionellem Metall hergestellten Mittel (102) erzeugt ist, verformbar ist;
- die Anordnung (200, 300, 400) Mittel (212) zum Steuern des Magnetfeldes (104) und somit auch der Gestalt des aus funktionellem Metall hergestellten Mittels (102) auf der Grundlage, ob das zur Einwirkung der Messgröße proportionale Messsignal einen vorab festgelegten Messbereich überschreitet/unterschreitet, um den Zugang der Messgröße zum Wiegeumformer zu begrenzen, wenn das zur Einwirkung der Messgröße proportionale Messsignal einen vorab festgelegten Messbereich überschreitet/unterschreitet; und
- die Steuermittel (212) gestaltet sind, um im Fall einer Überlastung/Unterforderung während einer Messung das um das funktionelles Metall enthaltende Mittel (102) erzeugte Magnetfeld allmählich zu ändern, so dass sich die Länge des funktionelles Metall enthaltenden Mittels ändert und die durch die Belastung erzeugte Krafteinwirkung wieder zumindest teilweise den Messumformer (202) erreicht.

2. Anordnung nach Anspruch 1, **dadurch gekennzeichnet, dass** besagtes aus funktionellem Metall hergestelltes Mittel (102) so gestaltet ist, dass als Folge seiner Verformung das Mittel (102) den Zugang der Einwirkung der Messgröße auf den Wiegeumformer (202, 402) direkt begrenzt.

3. Anordnung nach Anspruch 1, **dadurch gekennzeichnet, dass** die Anordnung auch ein Schutzmittel (406) umfasst und dass der Zugang der Einwirkung der Messgröße zum Wiegeumformer (202, 402) mit der Hilfe von besagtem aus funktionellem Metall hergestellten Mittel (102) direkt begrenzt ist, so dass als Folge seiner Verformung das Mittel (102) besagtes Schutzmittel (406) beeinflusst, wobei das Schutzmittel (406) den Zugang der Einwirkung der Messgröße zum Wiegeumformer (202, 402) begrenzt.

4. Anordnung nach einem der Ansprüche 1, 2 oder 3, **dadurch gekennzeichnet, dass** besagtes aus funktionellem Metall hergestelltes Mittel (102) oder besagtes Schutzmittel (406) so gestaltet ist, dass der Zugang der Einwirkung der Messgröße zum Wiegeumformer (202, 402) durch Steuern von besagtem Mittel/Schutzmittel (102/406) zumindest teilweise in einer Position vor dem Wiegeumformer (202, 402) auf der der Einwirkung der Messgröße unterliegenden Seite begrenzt wird.

5. Anordnung nach Anspruch 1, **dadurch gekennzeichnet, dass** besagtes funktionelles Metall magnetostriktives Metall ist.

6. Anordnung nach Anspruch 1, **dadurch gekennzeichnet, dass** besagter Wiegeumformer ein Kraft- oder Drucksensor ist.

7. Anordnung nach Anspruch 1, **dadurch gekennzeichnet, dass** besagtes zur Einwirkung der Messgröße proportionales Messsignal ein von dem Wiegeumformer (202, 402) erhaltenes elektrisches Messsignal ist.

8. Anordnung nach Anspruch 1, **dadurch gekennzeichnet, dass** die Anordnung mindestens eine Spule (108) zum Erzeugen eines Magnetfeldes (104) in Verbindung mit besagtem aus funktionellem Metall hergestellten Mittel (102) umfasst, wobei das Magnetfeld (104) der Spule (108) mittels der Spule (108) zugeführten elektrischen Stroms verändert wird.

9. Anordnung nach Anspruch 1, **dadurch gekennzeichnet, dass** die Anordnung zusätzlich eine Schutzeinheit (210) zum Analysieren eines zur Einwirkung der Messgröße auf den Wiegeumformer (202, 402) proportionalen Messsignals und eine Steuereinheit (212) in Datenübertragungsverbindung mit besagter Schutzeinheit (210) zum Verformen von besagtem aus funktionellem Metall hergestellten Mittel (102) hinsichtlich des Steuerns des erzeugten Magnetfeldes (104) umfasst.

10. Anordnung nach Anspruch 1, **dadurch gekennzeichnet, dass** der vorab festgelegte Messbereich ein variabler Messbereich ist, der die maximalen und minimalen Messwerte umfasst, denen der Wiegeumformer (202, 402) stand hält.

11. Anordnung nach Anspruch 1, **dadurch gekennzeichnet, dass** die Anordnung gestaltet ist, um manuell oder automatisch gesteuert zu werden, so dass die Anordnung auf Wunsch in einem geschützten Zustand gesetzt werden kann, in dem der Zugang der Einwirkung der Messgröße zum Wiegeumformer (202, 402) zumindest teilweise mit der Hilfe der Verformung von besagtem aus funktionellem Metall hergestellten Mittel (102) begrenzt ist.

12. Anordnung nach Anspruch 1 oder 11, **dadurch gekennzeichnet, dass** die Anordnung gestaltbar ist, um während eines Transports in einen geschützten Zustand gesetzt zu werden, wobei der Zugang der Einwirkung der Messgröße zum Wiegeumformer (202, 402) zumindest teilweise als Folge einer Verformung von besagtem aus funktionellem Metall hergestellten Mittel (102) begrenzt wird.

13. Anordnung nach einem der Ansprüche 1, 11 oder 12, **dadurch gekennzeichnet, dass** die Anordnung gestaltet ist, um den Benutzer darüber zu informieren, dass sich die Anordnung in einem geschützten Zustand befindet, während dessen der Zugang der Einwirkung der Messgröße zum Wiegeumformer (202, 402) zumindest teilweise als Folge einer Verformung von besagtem aus funktionellem Metall hergestellten Mittel (102) begrenzt ist.

14. Anordnung nach einem der vorangehenden Ansprüche, **dadurch gekennzeichnet, dass** sie gestaltet ist, um eine Datenübertragung zwischen unterschiedlichen Teilen (202, 210, 212) der Anordnung und dem Benutzer gemäß Kabel- oder Funkdatenübertragungsspezifikationen durchzuführen.

15. Verfahren (500, 600) zum Schützen eines Wiegeumformers (202, 402) vor der Einwirkung einer Messgröße, deren Betrag und/oder Richtung einen vorab festgelegten Messbereich Überschreitet/unterschreitet, in einer Wiegevorrichtung, wobei der Wiegeumformer ein Messsignal bereitstellt, das proportional zur Einwirkung der Messgröße auf den Wiegeumformer (202, 402) ist,
wobei bei dem Verfahren der Zugang der Messgröße zum Wiegeumformer begrenzt wird, wenn die Messgröße einen vorab festgelegten Messbereich überschreitet/unterschreitet, und es analysiert wird (510, 610), ob ein zur Einwirkung der Messgröße proportionales Messsignal einen vorab festgelegten Messbereich unterschreitet/überschreitet;
**dadurch gekennzeichnet, dass**:
- wenn das zur Einwirkung der Messgröße auf den Wiegeumformer (202, 402) proportionale Messsignal einen vorab festgelegten Messbereich überschreitet/unterschreitet, ein variables Magnetfeld an ein aus funktionellem Metall hergestelltes Mittel angelegt wird, wobei das funktionelle Metall ferromagnetisches oder magnetostriktives Metall ist und die Gestalt des aus funktionellem Metall hergestellten Mittels (102) mit der Hilfe eines Magnetfeldes (104) verformbar ist;
und
- der Zugang der Messgröße zum Wiegeumformer mit der Hilfe einer Verformung des aus funktionellem Metall hergestellten Mittels begrenzt wird, wenn besagtes variables Magnetfeld an das aus funktionellem Metall hergestellte Mittel angelegt wird, wenn das zur Einwirkung der Messgröße proportionale Messsignal einen vorab festgelegten Messbereich überschreitet/unterschreitet;
und
- Steuermittel (212) im Fall einer Überlastung/Unterforderung während einer Messung das Magnetfeld, das um das funktionelle Metall enthaltende Mittel (102) erzeugt ist, allmählich ändern, so dass sich die Länge des funktionelles Metall enthaltenden Mittels ändert und die von der Belastung erzeugte Krafteinwirkung wieder den Messumformer (202) zumindest teilweise erreicht.

16. Verfahren nach Anspruch 15, **dadurch gekennzeichnet, dass** der Zugang der Einwirkung der Messgröße zum Wiegeumformer (202, 402) mit der Hilfe von besagtem aus funktionellem Metall hergestellten Mittel (102) direkt begrenzt wird.

17. Verfahren nach Anspruch 15, **dadurch gekennzeichnet, dass** der Zugang der Einwirkung des Messsignals zum Wiegeumformer (202, 402) mit der Hilfe von besagtem aus funktionellem Metall hergestellten Mittel (102) indirekt begrenzt wird, so dass als Folge seiner Verformung das Mittel (102) mindestens ein anderes Schutzmittel (406) beeinflusst, wobei besagtes Schutzmittel (406) den Zugang der Einwirkung der Messgröße zum Wiegeumformer (202, 402) begrenzt.

18. Verfahren nach Anspruch 15, **dadurch gekennzeichnet, dass** ein Magnetfeld (104) in Verbindung mit besagtem aus funktionellen Metall hergestellten Mittel (102) mit der Hilfe von mindestens einer Spule (108) erzeugt wird und dass besagtes Magnetfeld (104) mittels der Spule (108) zugeführten elektrischen Stroms variiert wird.

19. Verfahren nach Anspruch 15, **dadurch gekennzeichnet, dass** das Verfahren eine Analyse (510, 610) eines zur Einwirkung der Messgröße auf den Wiegeumformer (202, 402) proportionalen Messsignals mit Hilfe einer Schutzeinheit (210) umfasst und dass das zum Verformen von besagtem aus funktionellem Metall hergestellten Mittel (102) erzeugte Magnetfeld (104) mit einer Steuereinheit (212) in Datenübertragungsverbindung mit der Schutzeinheit (210) gesteuert wird.

20. Verfahren nach Anspruch 15, **dadurch gekennzeichnet, dass** die Anordnung manuell oder automatisch gesteuert wird, um die Anordnung auf Wunsch in einen geschützten Zustand zu setzen, in dem der Zugang der Einwirkung der Messgröße zum Wiegeumformer (202, 402) mittels Verformung von besagtem aus funktionellem Metall hergestellten Mittel (102) zumindest teilweise begrenzt wird.

21. Verfahren nach Anspruch 15 oder 20, **dadurch gekennzeichnet, dass** die Anordnung während des Transports in einem geschützten Zustand ist, so dass der Zugang der Einwirkung der Messgröße zum Wiegeumformer (202, 402) zumindest teilweise mit der Hilfe einer Verformung von besagtem aus funktionellem Metall hergestellten Mittel (102) begrenzt wird.

22. Verfahren nach einem der Ansprüche 15, 20 oder 21, **dadurch gekennzeichnet, dass** der Benutzer darüber informiert wird, dass sich die Anordnung in einem geschützten Zustand befindet, in dem der Zugang der Einwirkung der Messgröße zum Wiegeumformer (202, 402) zumindest teilweise als Folge einer Verformung von besagtem aus funktionellem Metall hergestellten Mittel (102) begrenzt ist.

23. Verfahren nach einem der vorangehenden Ansprüche, **dadurch gekennzeichnet, dass** die Datenübertragung zwischen unterschiedlichen Teilen (202, 210, 212) der Anordnung und dem Benutzer gemäß Kabel- oder Funkdatenübertragungsspezifikationen durchgeführt wird.

## Revendications

1. Agencement (200, 300, 400) permettant de protéger un transducteur de pesée (202, 402) d'un dispositif de pesée vis-à-vis de l'effet d'une quantité mesurée, dont la grandeur et/ou la direction excèdent/descendent en dessous d'une plage de mesures prédéterminée, le transducteur de pesée fournissant un signal de mesure qui est proportionnel à l'effet de la quantité mesurée du transducteur de pesée (202, 402), dans lequel l'agencement comprend
- un moyen permettant de limiter l'accès de la quantité mesurée au transducteur de pesée lorsque la quantité mesurée excède/descend en dessous d'une plage de mesures prédéterminée, et
- un moyen permettant d'analyser si le signal de mesure proportionnel à l'effet de la quantité mesurée excède/descend en dessous d'une plage de mesures prédéterminée ; **caractérisé en ce que** :
- le moyen pour limiter comprend un moyen (102) constitué d'un métal fonctionnel, le métal fonctionnel étant un matériau ferromagnétique ou magnétostrictif, la forme du moyen (102) constitué d'un métal fonctionnel étant déformable à l'aide d'un champ magnétique (104) généré en relation avec le moyen (102) constitué d'un métal fonctionnel ;
- l'agencement (200, 300, 400) comprend des moyens (112) permettant de commander ledit champ magnétique (104) et ainsi également la forme dudit moyen (102) constitué d'un métal fonctionnel selon si le signal de mesure proportionnel à l'effet de la quantité mesurée excède/descend en dessous d'une plage de mesures prédéterminée, afin de limiter l'accès de la quantité mesurée au transducteur de pesée lorsque le signal de mesure proportionnel à l'effet de la quantité mesurée excède/descend en dessous d'une plage de mesures prédéterminée ;
et
les moyens de commande (212) sont adaptés pour, dans le cas d'une surcharge/sous-charge pendant la mesure, changer graduellement le champ magnétique généré autour du moyen (102) contenant un métal fonctionnel de sorte que la longueur du moyen contenant un métal fonctionnel change et que l'effet de force produit par la charge atteint de nouveau le transducteur de mesure (202) au moins en partie.

2. Agencement selon la revendication 1, **caractérisé en ce que** ledit moyen (102) constitué d'un métal fonctionnel est agencé de telle sorte que, consécutivement à sa déformation, le moyen (102) limite directement l'accès de l'effet de la quantité mesurée au transducteur de pesée (202, 402).

3. Agencement selon la revendication 1, **caractérisé en ce que** l'agencement comprend également un moyen protecteur (406) et **en ce que** l'accès de l'effet de la quantité mesurée au transducteur de pesée (202, 402) est limité à l'aide dudit moyen (102) constitué d'un métal fonctionnel indirectement de sorte que, consécutivement à sa déformation, le moyen (102) affecte ledit moyen protecteur (406), le moyen protecteur (406) limitant l'accès de l'effet de la quantité mesurée au transducteur de pesée (202, 402).

4. Agencement selon l'une quelconque des revendications 1, 2 ou 3, **caractérisé en ce que** ledit moyen (102) constitué d'un métal fonctionnel ou ledit moyen protecteur (406) est agencé de telle sorte que l'accès de l'effet de la quantité mesurée au transducteur de pesée (202, 402) est limité en commandant ledit moyen/moyen protecteur (102/406) au moyen en partie dans une position en face du transducteur de pesée (202, 402) du côté soumis à l'effet de la quantité mesurée.

5. Agencement selon la revendication 1, **caractérisé en ce que** ledit métal fonctionnel est un métal magnétostrictif.

6. Agencement selon la revendication 1, **caractérisé en ce que** ledit transducteur de pesée est un capteur de force ou de pression.

7. Agencement selon la revendication 1, **caractérisé en ce que** ledit signal de mesure proportionnel à l'effet de la quantité mesurée est un signal de mesure électrique obtenu à partir du transducteur de pesée (202, 402).

8. Agencement selon la revendication 1, **caractérisé en ce que** l'agencement comprend au moins une bobine (108) permettant de générer un champ magnétique (104) en relation avec ledit moyen (102) constitué d'un métal fonctionnel, le champ magnétique (104) de la bobine (108) étant changé au moyen d'un courant électrique fourni à la bobine (108).

9. Agencement selon la revendication 1, **caractérisé en ce que** l'agencement comprend en outre une unité protectrice (210) permettant d'analyser un signal de mesure proportionnel à l'effet de la quantité mesurée sur le transducteur de pesée (202, 402) et une unité de commande (212) en communication de transfert de données avec ladite unité protectrice (210) pour déformer ledit moyen (102) constitué d'un métal fonctionnel, en vue de commander le champ magnétique généré (104).

10. Agencement selon la revendication 1, **caractérisé en ce que** ladite plage de mesures prédéterminée est une plage de mesures variable comprise entre les valeurs de mesure maximale et minimale que le transducteur de pesée (202, 402) supporte.

11. Agencement selon la revendication 1, **caractérisé en ce que** l'agencement est agencé pour être commandé manuellement ou automatiquement, de sorte que l'agencement peut être placé dans l'état protégé si on le souhaite, dans lequel l'accès de l'effet de la quantité mesurée au transducteur de pesée (202, 402) est limité au moins en partie à l'aide de la déformation dudit moyen (102) constitué d'un métal fonctionnel.

12. Agencement selon la revendication 1 ou 11, **caractérisé en ce que** l'agencement peut être agencé pour être placé dans l'état protégé pendant le transport, l'accès de l'effet de la quantité mesurée au transducteur de pesée (202, 402) étant au moins en partie limité consécutivement à la déformation dudit moyen (102) constitué d'un métal fonctionnel.

13. Agencement selon l'une quelconque des revendications 1, 11 ou 12, **caractérisé en ce que** l'agencement est agencé pour informer l'utilisateur du fait que l'agencement est dans l'état protégé, pendant lequel l'accès de l'effet de la quantité mesurée au transducteur de pesée (202, 402) est limité au moins en partie consécutivement à la déformation dudit moyen (102) constitué d'un métal fonctionnel.

14. Agencement selon l'une quelconque des revendications précédentes, **caractérisé en ce qu'**il est agencé pour effectuer un transfert de données entre différentes parties (202, 210, 212) de l'agencement et l'utilisateur selon des spécifications de transfert de données filaire ou sans fil.

15. Procédé (500, 600) permettant de protéger un transducteur de pesée (202, 402) vis-à-vis de l'effet d'une quantité mesurée, dont la grandeur et/ou la direction excèdent/descendent en dessous d'une plage de mesures prédéterminée, dans un dispositif de pesée dans lequel le transducteur de pesée fournit un signal de mesure qui est proportionnel à l'effet de la quantité mesurée sur le transducteur de pesée (202, 402),
dans lequel, dans le procédé, l'accès de la quantité mesurée au transducteur de pesée est limité lorsque la quantité mesurée excède/descend en dessous d'une plage de mesures prédéterminée,
et il est analysé (510, 610) si un signal de mesure proportionnel à l'effet de la quantité mesurée excède/descend en dessous d'une plage de mesures prédéterminée ; **caractérisé en ce que** :
- lorsque le signal de mesure proportionnel à l'effet de la quantité mesurée sur le transducteur de pesée (202, 402) excède/descend en dessous d'une plage de mesures prédéterminée, un champ magnétique variable est appliqué à un moyen constitué d'un métal fonctionnel, le métal fonctionnel étant un matériau ferromagnétique ou magnétostrictif, la forme du moyen (102) constituée d'un métal fonctionnel étant déformable à l'aide d'un champ magnétique (104) ;
- l'accès de la quantité mesurée au transducteur de pesée est limité à l'aide de la déformation du moyen constitué d'un métal fonctionnel lorsque ledit champ magnétique variable est appliqué au moyen constitué d'un métal fonctionnel lorsque le signal de mesure proportionnel à l'effet de la quantité mesurée excède/descend en dessous d'une d'une plage de mesures prédéterminée ;
et
- des moyens de commande (212), dans le cas d'une surcharge/sous-charge pendant la mesure, changent graduellement le champ magnétique généré autour du moyen (102) contenant un métal fonctionnel de sorte que la longueur du moyen contenant le métal fonctionnel change et que l'effet de force produit par la charge atteint à nouveau le transducteur de mesure (202) au moins en partie.

16. Procédé selon la revendication 15, **caractérisé en ce que** l'accès de l'effet de la quantité mesurée au transducteur de pesée (202, 402) est limité directement à l'aide dudit moyen (102) constitué d'un métal fonctionnel.

17. Procédé selon la revendication 15, **caractérisé en ce que** l'accès de l'effet de la quantité mesurée au transducteur de pesée (202, 402) est limité indirectement à l'aide dudit moyen (102) constitué d'un métal fonctionnel de telle sorte que, consécutivement à sa déformation, le moyen (102) affecte au moins un autre moyen protecteur (406), ledit moyen protecteur (406) limitant l'accès de l'effet de la quantité mesurée au transducteur de pesée (202, 402).

18. Procédé selon la revendication 15, **caractérisé en ce qu'**un champ magnétique (104) est généré en relation avec ledit moyen (102) constitué d'un métal fonctionnel à l'aide d'au moins une bobine (108), et **en ce que** ledit champ magnétique (104) fait l'objet d'une variation au moyen d'un courant électrique fourni à la bobine (108).

19. Procédé selon la revendication 15, **caractérisé en ce que** le procédé comprend l'analyse (510, 610) d'un signal de mesure proportionnel à l'effet de la quantité mesurée sur le transducteur de pesée (202, 402) à l'aide d'une unité protectrice (210) et **en ce que** le champ magnétique (104) généré pour déformer ledit moyen (102) constitué d'un métal fonctionnel est commandé avec une unité de commande (212) en communication de transfert de données avec l'unité protectrice (210).

20. Procédé selon la revendication 15, **caractérisé en ce que** l'agencement est commandé manuellement ou automatiquement pour placer l'agencement dans un état protégé si on le souhaite, dans lequel l'accès de l'effet de la quantité mesurée au transducteur de pesée (204, 402) est limité en partie au moyen de la déformation dudit moyen (102) constitué d'un métal fonctionnel.

21. Procédé selon la revendication 15 ou 20, **caractérisé en ce que** l'agencement est agencé dans un état protégé pendant le transport, de sorte que l'accès de l'effet de la quantité mesurée au transducteur de pesée (202, 402) est limité au moins en partie l'aide de ladite déformation dudit moyen (102) constitué d'un métal fonctionnel.

22. Procédé selon l'une quelconque des revendications 15, 20 ou 21, **caractérisé en ce que** l'utilisateur est informé du fait que l'agencement est dans un état protégé, dans lequel l'accès de l'effet de la quantité mesurée au transducteur de pesée (202, 402) est limité au moins en partie consécutivement à la déformation dudit moyen (102) constitué d'un métal fonctionnel.

23. Procédé selon l'une quelconque des revendications précédentes, **caractérisé en ce que** le transfert de données entre différentes parties (202, 210, 212) de l'agencement et l'utilisateur est effectué selon des spécifications de transfert de données filaire ou sans fil.
